(19) Europäisches Patentamt
European Patent Office
Office européen des brevets

(11) EP 1 880 774 B1

(12) # EUROPEAN PATENT SPECIFICATION

(45) Date of publication and mention of the grant of the patent:
**09.09.2009 Bulletin 2009/37**

(51) Int Cl.:
***B07C 5/02*** *(2006.01)* ***B65G 47/26*** *(2006.01)*

(21) Application number: **07112172.7**

(22) Date of filing: **10.07.2007**

(54) **Machine for inspecting bottles comprising a spacing mechanism**

Maschine zur Überprüfung von Flaschen mit einem Abstandsverstellmechanismus

Machine pour inspecter des bouteilles avec un mécanisme d'écartement

(84) Designated Contracting States:
**DE FR GB IT**

(30) Priority: **17.07.2006 US 487748**

(43) Date of publication of application:
**23.01.2008 Bulletin 2008/04**

(73) Proprietor: **Emhart Glass S.A.**
**6330 Cham (CH)**

(72) Inventor: **Giometti, Stephen M.**
**Horseheads, NY 14845 (US)**

(74) Representative: **Warren, Anthony Robert et al**
**Baron Warren Redfern**
**19 South End**
**Kensington**
**London**
**W8 5BU (GB)**

(56) References cited:
**EP-A- 0 757 960**
**EP-A- 0 806 383**
**US-A- 4 142 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 880 774 B1

Printed by Jouve, 75001 PARIS (FR)

## Description

The present invention relates to machines which inspect containers, such as bottles, for visual or structural defects, e.g. known from US-A-4.142.636.

There are several methods of inspecting glass bottles for defects that require the bottles to be spaced apart on a conveyor while the inspection is being performed. The current method of doing this is to use a mechanical device to slow down the bottle relative to the conveyor speed and then release it back on the conveyor where it accelerates back to conveyor speed. This mechanical device can take the form of a belt conveyor, opposed compliant wheels or a spring loaded finger wheel. At higher bottle throughput speeds, the bottle slides on the first-mentioned conveyor as it accelerates back to conveyor speed. This leads to inconsistent spacing of the bottles and instability of the bottles on the conveyor. This instability and the drag on the bottle from the stationary guide rails can lead to bottles tipping over and jamming.

The goal of this invention is to consistently space the containers on the conveyor for inspection, while eliminating the instability of the bottle as it is released back on to the conveyor.

According to one aspect of the present invention, there is provided a machine for inspecting containers as defined in claim 1.

The present invention will now be described with reference to the accompanying drawings which illustrate a presently preferred embodiment incorporating the principles of the invention, and in which:-

Figure 1 is a schematic top view of a portion of a container inspecting machine made in accordance with the teachings of the present invention; and

Figure 2 is a block diagram illustrating the control of the bottle spacing mechanism of the container inspecting machine shown in Figure 1.

The inspection machine has a bottle spacing mechanism made up of three compliant belt conveyors (10, 20 and 30). The belts 40 are typically toothed timing belts with foam facing. Each belt conveyor includes a motor driven drive pulley or roller 42 located at the downstream end, and an idler pulley 44 at the upstream end (the drive pulley for the lower left hand belt conveyor as viewed in Figure 1 is located beneath the idler pulley for the lower right hand belt conveyor). The foam compresses when a bottle 48 is trapped between opposing belt conveyors. The bottles 48 are riding on a conveyor, for example a flat top chain conveyor 50, which may, for example, pull bottles from a buffer area (not shown) where they are collected after exiting a Lehr associated with an I.S. machine. The chain conveyor 50 is driven by a suitable drive (not shown) at a linear velocity of V1. Belt conveyors 10 and 30 are moving at the same linear velocity V1. Belt conveyor 20, travels at a lower linear velocity V2. Upon entering the bottle spacing mechanism, a bottle is trapped between belt conveyors 10 and 20. The bottle's linear velocity ($V_B$) is based on the belt velocities. It can be shown that the bottle will travel at a linear velocity equal to:

$$V_B = [V1 + V2] / 2 \qquad (1)$$

V2 is less than V1 and may be zero. In the event V2 is zero, the belt conveyor 20 may be replaced with a stationary side rail. The difference in velocity will slow down the bottle's linear velocity and it will cause the bottles to roll between the belt of conveyor 10 and the belt of the conveyor 40 (or rail). This area is the low-speed section. When the bottle reaches belt conveyor 30, it will change linear velocity again based on the opposing belt speeds. Belt conveyors 10 and 30 both travel at linear velocity V1. This area is the high-speed section. The bottle's linear velocity will be V1, substantially matching the chain conveyor 50 velocity to obtain a smooth transfer. Two bottles entering the mechanism or device that are in contact with each other will be spaced apart a distance equal to the bottle diameter ($D_B$). When bottle A transitions from the low-speed to the high-speed section, its linear velocity will increase to V1. Bottle B will still be in the low-speed section traveling at a linear velocity of $V_B$. This difference in linear velocities will create spacing between bottles A and B. This spacing will be based on the two bottle velocities (V1 and $V_B$) and the amount of time (T) that the bottles are at different velocities. This time (T) is equal to the time it takes bottle B to reach the high-speed section after bottle A has reached it. This time is equal to:

$$T = D_B / V_B \qquad (2)$$

With position (X) being the position of the two bottles at the moment bottle B leaves the low-speed section:

$$X_A = V1 \times T \qquad (3)$$

$$X_B = V_B \times T \qquad (4)$$

The bottle spacing $X_{DIF}$ is equal to:

$$X_{DIF} = X_A - X_B \qquad (5)$$

Combining equations 2 and 5:

$$X_{DIF} = [(V1 / V_B) \times D_B] - [(V_B / V_B) \times D_B] \qquad (6)$$

Reducing this equation:

$$X_{DIF} = [(V1 / V_B) \times D_B] - D_B \qquad (7)$$

This shows that the spacing of bottles leaving this device will be based on the speeds of the belts and the diameter of the bottles. This device will space bottles or other containers effectively and return them to the chain conveyor at the same velocity. Varying the speed of belt conveyor 20 will vary the spacing.

When V2 is 0:

$$X_{DIF} = D_B$$

This more simple device, will always take bottles that enter in contact with each other and space them a distance apart that is equal to the bottle diameter and deliver them back on the conveyor 50 smoothly.

As shown in Figure 2, a hand held terminal (HHT/60) or other suitable computer input, delivers V1 to a First Drive Mechanism 62 for the conveyor 10 and to a Second Drive Mechanism 64 for the conveyor 30, and delivers V2 to a Third Drive Mechanism 63 for the conveyor 20. V1 and V2 can be selected to define the desired spacing. The mechanisms may each include an associated electric drive motor although, since conveyors 50, 10 and 30 travel at the same velocity V1, at least conveyors 10 and 30 may be driven by a common motor.

It will be understood that various modifications may be made without departing from the scope of the invention as defined in the appended claims. For example, if V2 is zero, and the dynamic bottle retarding device comprising the conveyor 20 is replaced by a static bottle retarding device such as the stationary side rail described earlier, the Third Drive Mechanism 63 shown in Figure 2 may be eliminated.

## Claims

**1.** A machine for inspecting containers, comprising
a conveyor (50) which conveys containers at a first velocity (V1), and
a container spacing mechanism for receiving containers conveyed by said conveyor at a first location and for releasing the containers onto said conveyor (50) at a second downstream location,
**characterized in that** the container spacing mechanism includes
a first belt conveyor (10) defining one side of a conveyor path for containers (48) progressing from said first location to said second location,
a first drive mechanism (62) including a drive pulley (42) which drives said first belt conveyor (10) at the first velocity (V1),
upstream container-retarding means (20) and a downstream second belt conveyor (30) defining respective upstream and downstream sections of the other side of the conveyor path for containers progressing from said first location to said second location,
a second drive mechanism (64) including a drive pulley (42) which drives said second belt conveyor (30) at the first velocity (V1) whereby a container conveyed between said first (10) and second (30) conveyors will be conveyed at the first velocity, and
said upstream container-retarding means (20) being arranged, or driveable, to have a second velocity (V2) lower than said first velocity (V1) whereby a container conveyed between said first belt conveyor (10) and said retarding means (20) will be conveyed at a velocity ($V_8$) lower than the first velocity,
said second velocity (V2) resulting in containers released onto the conveyor (50) having a selected spacing ($X_{DIF}$).

2. A machine for inspecting containers according to claim 1, wherein said retarding means (20) comprises an upstream third belt conveyor, a third drive mechanism (63) being provided including a drive pulley (42) which drives said third belt conveyor (20) at said second velocity (V2) lower than said first velocity (V1).

3. A machine for inspecting containers according to claim 2, wherein said container spacing mechanism further includes an input device (60) for defining the second velocity (V2) of said third drive mechanism (63).

4. A machine for inspecting containers according to claim 1, 2, or 3 wherein the second velocity (V2) is zero.

5. A machine for inspecting containers according to claim 1, wherein the second velocity (V2) is zero and said retarding means (20) comprises a stationary side wall.

## Patentansprüche

1. Maschine zur Inspektion von Behältern, mit
einem Fördermittel (50), das Behälter mit einer ersten Geschwindigkeit (V1) transportiert, und
einem Behälterabstandsmechanismus zum Aufnehmen von Behältern, die von dem Fördermittel transportiert werden, an einer ersten Stelle und zum Freigeben der Behälter auf das Fördermittel (50) an einer zweiten nachgelagerten Stelle,
**dadurch gekennzeichnet, dass** der Behälterabstandsmechanismus
einen ersten Bandförderer (10), der eine Seite eines Förderpfades für Behälter (48) definiert, die sich von der ersten Stelle zur zweiten Stelle vorwärts bewegen,
einen ersten Antriebsmechanismus (62) mit einem Antriebsrad (42), das den ersten Bandförderer (10) mit der ersten Geschwindigkeit (V1) antreibt,
vorgelagerte Behälterverzögerungsmittel (20) und einen nachgelagerten zweiten Bandförderer (30), der jeweils vor- und nachgelagerte Sektionen der anderen Seite des Förderpfades für Behälter definiert, die sich von der ersten Stelle zur zweiten Stelle vorwärts bewegen,
sowie einen zweiten Antriebsmechanismus (64) mit einem Antriebsrad (42) umfasst, das den zweiten Bandförderer (30) mit der ersten Geschwindigkeit (V1) antreibt, wodurch ein Behälter, der zwischen dem ersten (10) und dem zweiten (30) Förder transportiert wird, mit der ersten Geschwindigkeit transportiert wird,
wobei die vorgelagerte Behälterverzögerungseinrichtung (20) so gestaltet oder antreibbar ist, dass sie eine zweite Geschwindigkeit (V2) hat, die niedriger als die erste Geschwindigkeit (V1) ist, wodurch ein Behälter, der zwischen dem ersten Bandförderer (10) und der Verzögerungseinrichtung (20) transportiert wird, mit einer Geschwindigkeit ($V_8$) transportiert wird, die niedriger als die erste Geschwindigkeit ist,
und wobei die zweite Geschwindigkeit (V2) dazu führt, dass Behälter, die auf den Förderer (50) entlassen werden, einen ausgewählten Abstand ($X_{DIF}$) haben.

2. Maschine zur Inspektion von Behältern nach Anspruch 1, bei der die Verzögerungseinrichtung (20) einen vorgelagerten dritten Bandförderer umfasst, wobei ein dritter Antriebsmechanismus (63) vorgesehen ist, der ein Antriebsrad (42) umfasst, das den dritten Bandförderer (20) mit der zweiten Geschwindigkeit (V2) antreibt, die niedriger ist als die erste Geschwindigkeit (V1).

3. Maschine zur Inspektion von Behältern nach Anspruch 2, bei der der Behälterabstandsmechanismus weiterhin ein Eingabegerät (60) zur Festlegung der zweiten Geschwindigkeit (V2) des dritten Antriebsmechanismuses (63) umfasst.

**4.** Maschine zur Inspektion von Behältern nach Ansprüchen 1, 2 oder 3, bei der die zweite Geschwindigkeit (V2) null ist.

**5.** Maschine zur Inspektion von Behältern nach Anspruch 1, bei der die zweite Geschwindigkeit (V2) null ist und die Verzögerungseinrichtung (20) eine stationäre Seitenwand umfasst.

**Revendications**

**1.** Machine pour inspecter des conteneurs, comprenant :

un convoyeur (50) qui transporte des conteneurs à une première vitesse (V1), et
un mécanisme d'écartement de conteneurs pour recevoir des conteneurs transportés par ledit convoyeur à un premier emplacement et pour libérer les conteneurs sur ledit convoyeur (50) à un deuxième emplacement en aval,
**caractérisée en ce que** le mécanisme d'écartement de conteneurs comprend :

un premier transporteur à courroie (10) définissant un côté d'un chemin de convoyeur pour des conteneurs (48) progressant dudit premier emplacement audit deuxième emplacement,
un premier mécanisme d'entraînement (62) comprenant une poulie d'entraînement (42) qui entraîne ledit premier transporteur à courroie (10) à la première vitesse (V1),
des moyens de ralentissement de conteneurs amont (20) et un deuxième transporteur à courroie aval (30) définissant des sections respectives amont et aval de l'autre côté du chemin de convoyeur pour des conteneurs progressant dudit premier emplacement audit deuxième emplacement,
un deuxième mécanisme d'entraînement (64) comprenant une poulie d'entraînement (42) qui entraîne ledit deuxième transporteur à courroie (30) à la première vitesse (V1) de telle manière qu'un conteneur transporté entre lesdits premier et deuxième transporteurs à courroie (30) est transporté à la première vitesse, et
lesdits moyens de ralentissement de conteneurs amont (20) étant agencés, ou pouvant être entraînés, pour avoir une deuxième vitesse (V2) inférieure à ladite première vitesse (V1) de telle manière qu'un conteneur transporté entre ledit premier transporteur à courroie (10) et lesdits moyens de ralentissement (20) est transporté à une vitesse ($V_B$) inférieure à la première vitesse,
ladite deuxième vitesse (V2) ayant pour conséquence que les conteneurs libérés sur le convoyeur (50) ont un écartement sélectionné ($X_{DIF}$).

**2.** Machine pour inspecter des conteneurs selon la revendication 1, dans laquelle lesdits moyens de ralentissement (20) comprennent un troisième transporteur à courroie amont, un troisième mécanisme d'entraînement (63) étant fourni, comprenant une poulie d'entraînement (42) qui entraîne ledit troisième transporteur à courroie (20) à ladite deuxième vitesse (V2) inférieure à ladite première vitesse (V1).

**3.** Machine pour inspecter des conteneurs selon la revendication 2, dans laquelle ledit mécanisme d'écartement de conteneurs comprend en outre un dispositif d'entrée (60) pour définir la deuxième vitesse (V2) dudit troisième mécanisme d'entraînement (63).

**4.** Machine pour inspecter des conteneurs selon la revendication 1, 2 ou 3, dans laquelle la deuxième vitesse (V2) est égale à zéro.

**5.** Machine pour inspecter des conteneurs selon la revendication 1, dans laquelle la deuxième vitesse (V2) est égale à zéro et lesdits moyens de ralentissement (20) comprennent une paroi latérale immobile.

*Fig. 1*

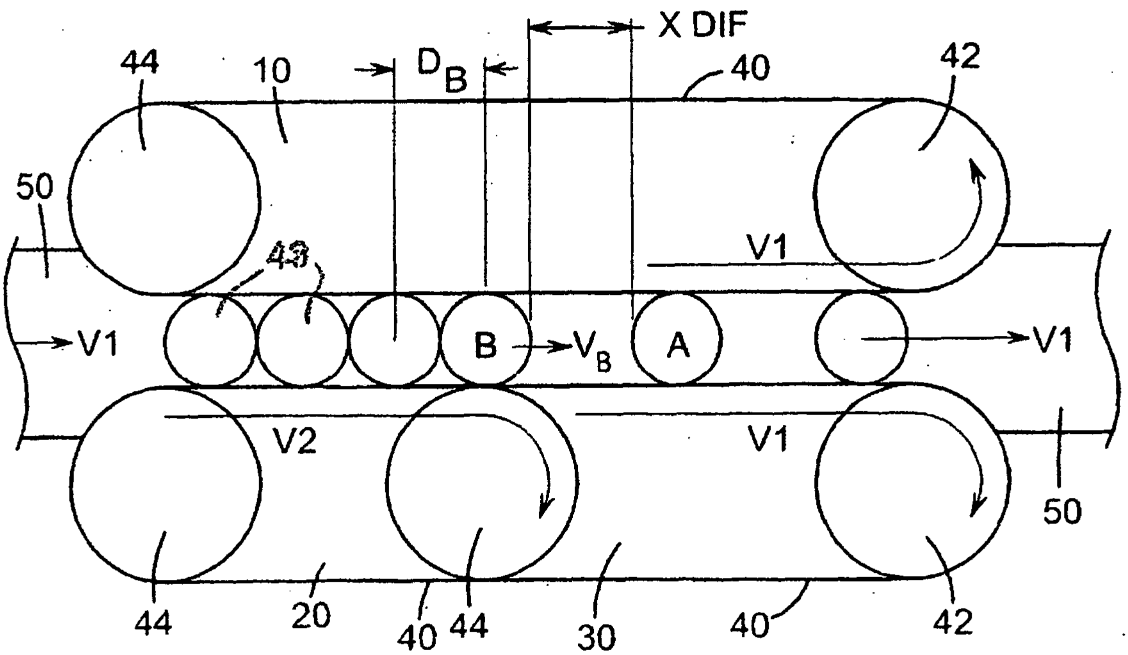

*Fig. 2*

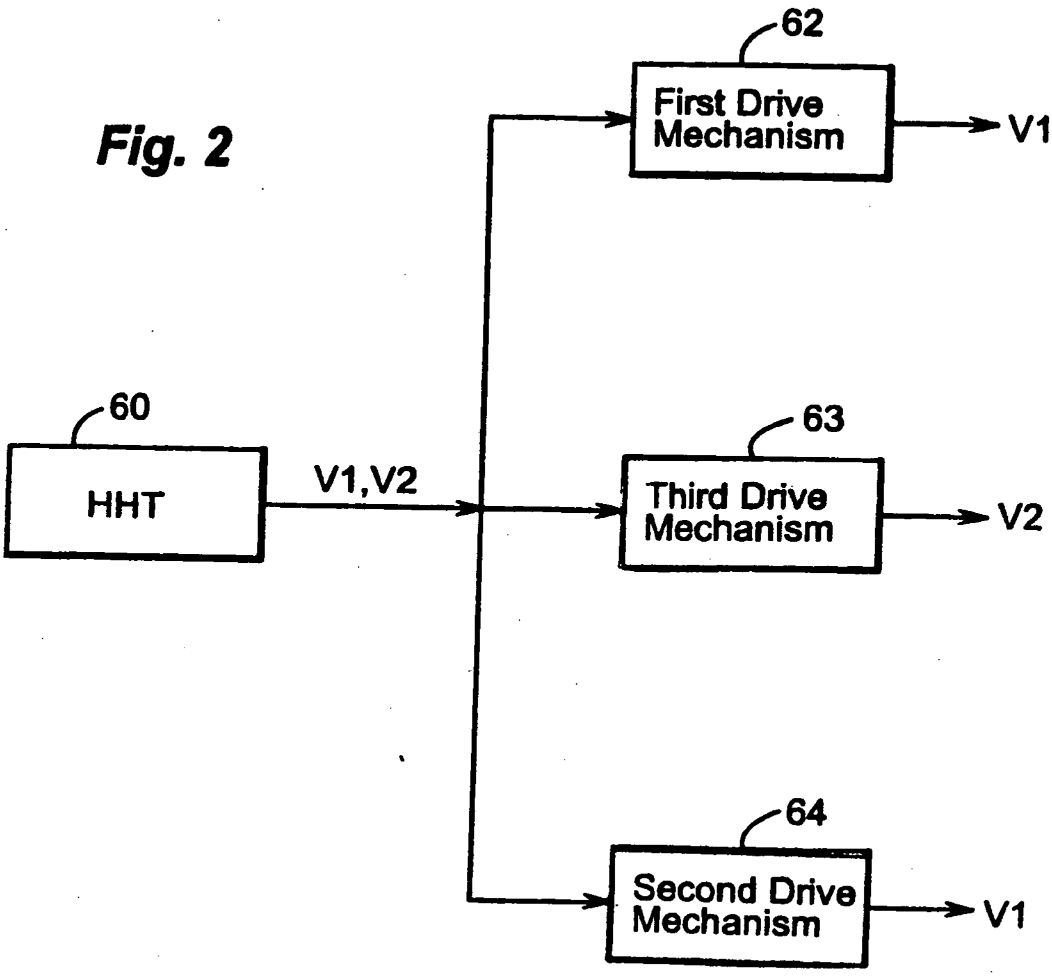
62
First Drive Mechanism
V1
60
HHT
V1,V2
63
Third Drive Mechanism
V2
64
Second Drive Mechanism
V1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4142636 A